# EUROPEAN PATENT APPLICATION

(11) **EP 0 816 711 A2**
(43) Date of publication of application: **07.01.1998**
(21) Application number: 97850127.8
(22) Date of filing: 15.06.1993
(51) Int. Cl.: F16F 9/06, F16F 9/32, F16F 9/46, F16F 9/516, F16F 9/18

(54) **Adjustable piston type shock absorber**

(30) Priority: 09.12.1992 SE 9203706
(62) Divisional of application: 93850133.5
(71) Applicant: ÖHLINS RACING AB, 194 27 Upplands Väsby (SE)
(72) Inventor: Danek, Magnus, 141 38 Huddinge (SE)
(74) Representative: Karlsson, Berne

(57) **Abstract**

A shock absorber (1) comprises a cylinder (2) and a therein-operating piston (15). Additionally therein included is a channel (4), which is disposed outside the cylinder and in which the working medium of the cylinder is displaceable between the top and bottom sides (8, 9) of the piston. Upon displacement, the working medium passes adjustable mechanisms which determine one or more shock absorber parameters. A tubular element (3) is disposed outside the cylinder and the gap between the elements forms the said channel (4). The adjustment mechanisms are disposed at the one ends (2a, 3a) of the cylinder and of the tubular element, at which ends accessibility is arranged to enable adjustment of the said parameters.

It is proposed that Figure 1 should accompany the abstract.

## Description

### TECHNICAL FIELD

The present invention relates to a device relating to a shock absorber, which device comprises a cylinder and a therein-operating piston and at least one channel which is disposed outside the cylinder and in which the working medium of the cylinder is displaceable upon the motions of the piston. In the said displacement, the working medium passes mechanisms which determine one or more shock absorber parameters, e.g. damping level, bleeding function, etc.

### PRIOR ART

The shock absorber can be used, inter alia, on a two-wheeled vehicle (motor-cycle) and exhibits, in this case, mechanisms for securing to the chassis or wheels. It is also known to dispose next to the cylinder and piston rod a clamped main spring, which is applied between a flange on the cylinder and a flange on the piston rod. The piston operates in a medium (consisting of or containing hydraulic oil) and during the realised shock absorption the cylinder medium is transported, at least primarily, between the top and bottom sides of the piston via the said channels disposed outside the cylinder.

It is previously known to arrange a shock absorber with adjusting mechanisms, e.g. manually actuatable adjusting mechanisms, in order to enable adjustments of the said bleeding function, damping level, etc. The adjustment functions are utilised, for example, in tuning the shock absorber to different driving conditions, e.g. to different types of race track and terrain.

### DESCRIPTION OF THE INVENTION

### TECHNICAL PROBLEM

In order to achieve the said adjustment functions on the shock absorber, it has previously been proposed that the shock absorber should operate at high pressure levels, e.g. pressure levels of up to 50 bar or more. In the case, for example, of a shock absorber having a separate, associated gas accumulator element, the adjustment mechanisms were disposed next to or in the gas accumulator element at the same time as the said high-pressure functioning was being obtained. Under the said high pressure, the medium/hydraulic oil behaves as a spring which has undesirable effects upon or deforms the damping curve in a non-controllable manner (cf. "hysteresis function"). The object of the invention is to solve, inter alia, this problem.

According to the concept of the invention, it is important to be able to combine low-pressure functioning with simple adjustability of shock absorber parameters. The invention also solves this problem.

It is important to be able to provide a shock absorber which, despite the said gap or channel disposed outside the cylinder, is arranged as a compact, cohesive unit which, for example, has no wiring for the shunting outside the piston construction. The invention solves this problem.

The adjustment mechanisms should be able, of course, to constitute a connection to the shock absorber construction and grant easy accessibility to one or both ends of the shock absorber. This problem too is solved by the invention.

The adjustment mechanisms should he able to form a shock absorber element which, in production, can be easily applied to and, upon servicing of the shock absorber, can be easily removed from tubular inner and outer elements in the shock absorber. The invention provides a solution to this problem.

In connection with the said shock absorber element comprising adjustment mechanisms, use is made of a wall element connected to the tubular inner and outer elements. The wall element separates the external channel leading between the top and bottom sides of the piston from passages which lead to the said adjustment mechanisms and from these to the said gap or channel. Separation and medium conduits to the adjustment mechanisms and to those mechanisms realising the shock absorber parameters would have to be expediently designed, even though the technical construction of the shock absorber is relatively simple and expedient shock absorber functions should be able to be obtained. The invention also provides a solution to this problem.

### SOLUTION

What can primarily be considered to be characteristic of a device according to the invention is that a tubular element is disposed outside the cylinder with a gap disposed between the inner surface of the element and the outer surface of the cylinder, which gap serves as the said channel, and that the said adjustment mechanisms are disposed at one or both ends of the cylinder and of the tubular element, at which ends accessibility is arranged to enable adjustment of one or more of the said parameters.

In one embodiment, the said adjustment mechanisms are disposed at the first ends of the cylinder and of the tubular element in order to enable adjustment of the damping constant and bleeding function of the shock absorber in its compression and expansion motions. In one embodiment, the shock absorber exhibits, at its one end, recesses extending in the transverse direction for accessing, location, installation, etc. of the said adjustment mechanisms. The shock absorber can exhibit at its one end, for example, four recesses extending in the transverse direction, in which there are disposed a first adjustment mechanism for adjusting the damping level in the respective medium direction and a second adjustment mechanism for adjusting the bleeding function in the respective medium direction. At the said one ends, there can be disposed a unit which is provided with one or more medium passages and which can in this case comprise an axially-extending tubular wall element, which separates the said medium passage or medium passages and the said gap/channel. A unit can be fastened at the one ends of the tubular element and of the cylinder, which unit is arranged to bear, in the applied position, against a unit comprising a medium passage and a partition element. Medium forced by the piston through the respective passage is herewith able to pass the adjustment mechanism/adjustment mechanisms and is conducted back via the outside of the partition element and the said gap/channel to the other side of the piston upon compression and vice-versa upon expansion. At the other ends of the tubular wall element and of the cylinder, the said gap/channel emerges/opens out behind the piston.

### ADVANTAGES

As a result of that which has been proposed above, a twin-tube absorber or circulation absorber is obtained, in which the cylinder chamber is disposed in the inner tube and the external channel has been established with the aid of the outside-situated tube. To the first ends of the tubes there has been screwed a unit comprising adjustment mechanisms for shock absorber parameters. A wall element can be disposed at the said tube end for realization of the separation and medium passage functions. The pressure in the absorber can be kept low by the arrangement of a large piston area, which is acted upon by the damping pressure. The fitting and disassembling functions are simple and facilitate production and servicing.

### LIST OF FIGURES

A presently proposed embodiment of a shock absorber exhibiting the significant characteristics of the invention will be described below, reference simultaneously being made to the appended drawing, in which:
Figures 1-4 show, in different views and sections, different elements and units which form part of a shock absorber, Figure 2 showing the embodiment of elements of the shock absorber according to Figure 1, Figure 3 showing a section A-A of the shock absorber according to Figure 2 and Figure 4 showing an end view of an inner wall forming part of the shock absorber according to Figure 1.
Figure 5; and 5a show, in the form of a basic diagram, the functions for the shock absorber according to Figures 1-4 and a second embodiment, respectively, and
Figure 6 shows, in the form of a graph, curves in the force/velocity graph, which curves can be adjusted by the adjustment function in the shock absorber.

### DETAILED EMBODIMENT

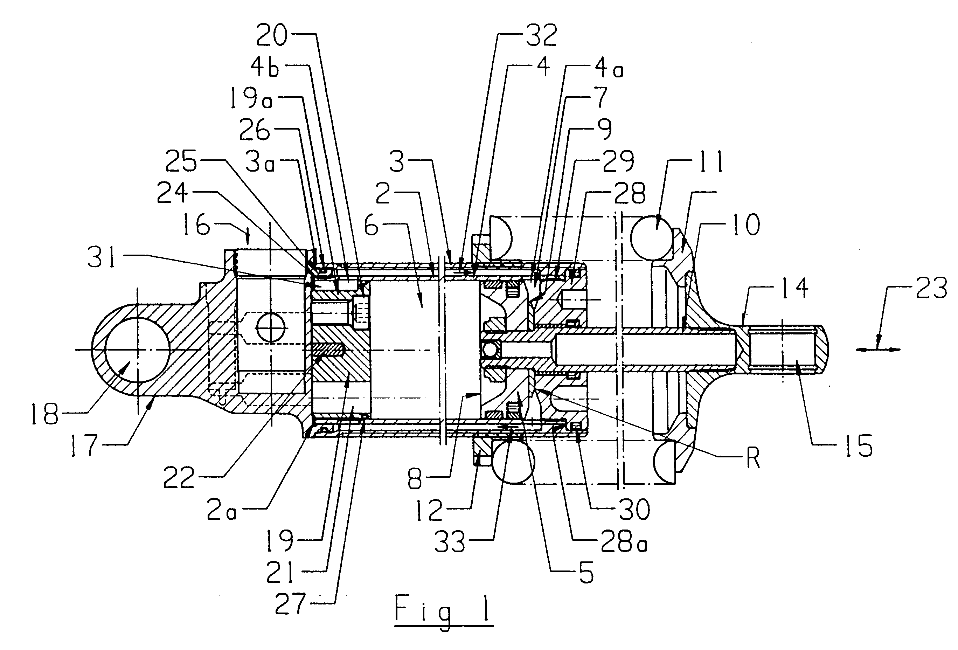

In Figure 1, a shock absorber, here referred to as circulation absorber, is denoted by 1. An inner tube has the notation 2 and an outer tube the notation 3. The said pipes 2 and 3 are herewith disposed relative to each other such that a gap 4 is configured between the tubes. The inner tube 2 forms a cylinder in the shock absorber. In the cylinder there is disposed a piston 5, which operates in the chambers 6, 7 of the cylinder. The bottom side of the piston is shown by 8 and its top side by 9. A piston rod which is fixed in the piston is shown by 10. The shock absorber is also provided with a main spring 11 disposed between a first flange 12 on the outside of the tube 3 and a second flange 13 fixed to the piston rod 10. To the piston rod there is attached a securing mechanism 14 having a recess 15 for the said securement of a type which is known per se. The securement can herewith be effected in a chassis on a vehicle (e.g. motor-cycle), the motion of the associated wheel (not shown) of which is to be damped by means of the shock absorber.

The shock absorber is also provided with a unit A which is fastened to the first ends 2a and 3a of the tubes 2, 3. The unit A is provided with recesses which, in Figure 1, have been symbolized by 16. The unit A is also provided with a second securing element 17 and an associated aperture 18. The shock absorber is attached by the latter securing element to the particular wheel or equivalent, the motion of which is to be damped with the shock absorber in question. At the said first ends 2a and 3a, the tube 2 is provided with a partition 19 exhibiting a cylindrical wall element 19a. The wall 19 is provided with a retaining mechanism 20 and one or more medium passages 21. The wall is fixed by means of a guide pin 22.

The piston and the piston rod can perform compression and expansion motions in the directions of the arrows 23. The piston and the piston rod are shown in Figure 1 in a fully expanded position which is achieved by means of the main spring 11. The compression motions take place counter to the action of the said main spring 11. The piston 5 is sealed against the inner surface of the tube 2 by means of seals of a known type, in a manner which is known per se. The piston rod is secured in the piston 5 in a manner which is likewise known. The said seals and fastenings will not therefore be described here in any greater detail.

The unit A can be screwed tightly into the inner tube by means of threads 24. The thread in the unit A is located on a tubular element 25. The said element 25 is sealed against the inner surface of the tube 3 by means of a seal 26. The inner wall is sealed against the inner surface of the tube 2 by means of a seal 27. The shock absorber is provided, at the back or at the top, with a forked element 28 and the inner tube 2 is screwed tightly into the forked element via threads 29. The outer element or outer tube 3 is fixed in the longitudinal direction by means of a stop surface 28a on the forked element and a stop surface on the said unit A. The outer tube 3 is sealed against the forked element by means of a seal 30.

The gap 4 opens out into the interior of the inner tube, above the piston 5, via an opening 4a and behind the partition 19 (viewed from the piston) via an opening 4b. When the piston performs its compression motion from the position shown in Figure 1, the medium located in the chamber 6 is compressed and forced out, via the said medium passages 21, to the unit A, which, as stated below, exhibits manually adjustable adjustment mechanisms for the bleeding function and damping level of the shock absorber. After passing via the adjustment mechanisms, the medium is transported on the basis of the force generated by the piston, back through one or more clack valves and onwards, via a recess or recesses 31, towards the gap 4. The transportation takes place, therefore, in the direction of the arrow 32, to the chamber 7 on the top side of the piston. When the piston, following completion of the compression motion, performs an expansion motion, the transportation of medium takes place in reverse from the chamber 7, via the gap 4, the recess 31, the said adjustment mechanisms, the said medium passage 21, to the chamber 6 at the bottom side 8 of the piston. This direction of transport is indicated in Figure 1 by 33. A return stop for the piston is indicated by R.

In accordance with the concept of the invention, the adjustment mechanisms are arranged so as to be easily accessible via the said outwardly-directed recesses (cf. 16 in Figure 1).

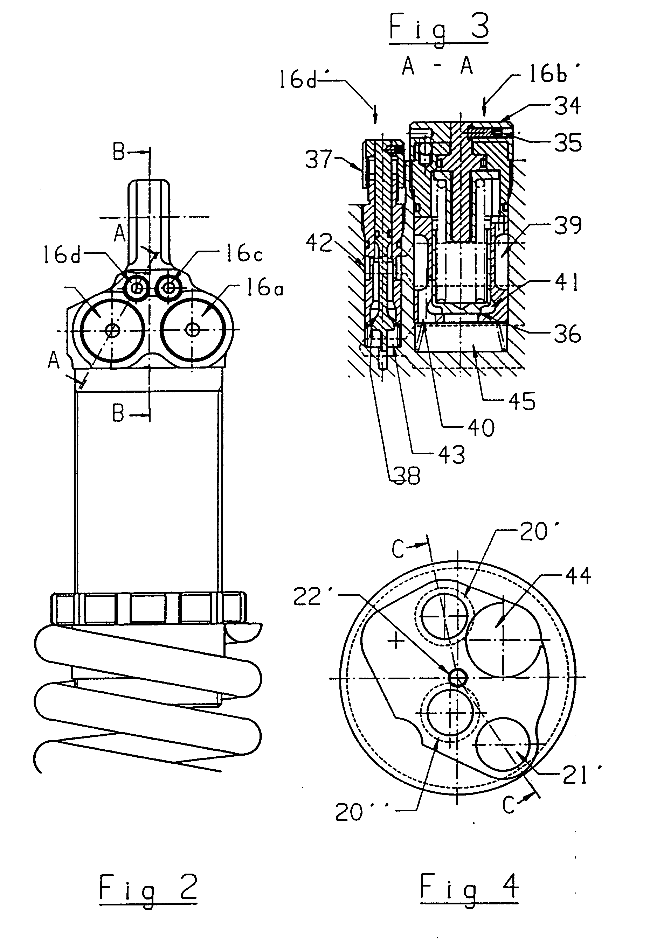

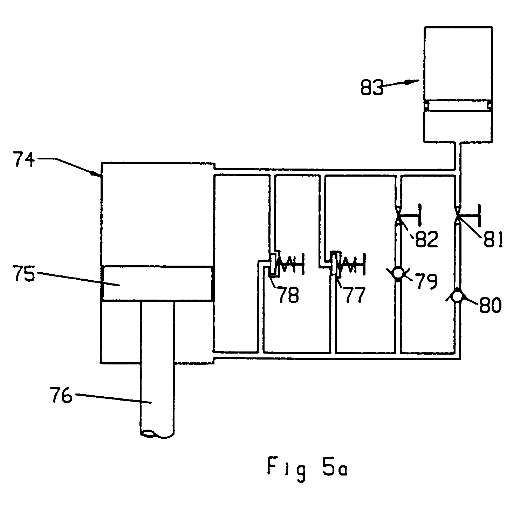

In Figure 1, the unit has been indicated a section B-B, which can be assigned to Figure 2. In Figures 1 and 2, the unit is twisted, in principle, by 90°.

Figure 2 shows four recesses 16a, 16b, 16c and 16d. In the recesses there are disposed adjustment mechanisms according to Figure 3. The adjustment mechanisms are easily accessibly by hand via the said recesses. Figure 3 shows an embodiment of the shock absorber along the section A-A in Figure 2. In Figure 3, a first adjustment mechanism 16b' is indicated and has a location in the recess 16b according to Figure 2. The said first adjustment mechanism is intended for manual adjustment of the damping level in the direction of compression of the shock absorber. Correspondingly, a second adjustment mechanism 16d' is arranged having location in the recess 16d according to Figure 2. The second adjustment mechanism is utilized for adjustment of the bleeding function in the direction of compression. Correspondingly, the recesses 16a and 16c have corresponding adjustment mechanisms for adjustment of the damping level and bleeding function in the direction of expansion. Where the functioning and construction in respect of the adjustment mechanisms is previously known and is not critical to the invention per se, they will not be described here in any greater detail. It is only necessary to state that a manually adjustable level-regulating knob 34 is arranged for manual adjustment and can be locked tight by means of a stop screw 35. The throttling function 36 in the adjustment mechanism in question is pre-tensioned or adjusted by means of the level-regulating knob. The second mechanism 16d', too, exhibits a level-regulating knob 37 and a throttling mechanism 38 which is adjustable by means of the level-regulating knob. In the first mechanism, the medium is introduced into the chamber 45 via a channel 41, in which the said throttling function is disposed, and conducted onwards, via a passage 40 and 39, back again to the shock absorber. In the second adjustment mechanism, medium is introduced in a corresponding manner via a recess 43, which is in contact, via the said throttling function 38, with a return channel 42. Medium is conducted from the return channel back to the particular side of the piston.

In Figure 1, the cylindrical guide pin 22 is indicated by 22'. In the present case, the retaining mechanisms (cf. 20 in Figure 1) are two in number and are indicated by 20', 20''. The medium passage has in this case been indicated by 21'. A chamber for the clack valve function is shown by 44.

The gap-shaped channel 4 can preferably extend around and along the entire periphery of the shock absorber. Alternatively, only parts of the periphery can be occupied by the said channel or channels. By large piston areas are here meant piston areas on pistons of diameters between 30 and 60 mm and which substantially exceed the area on the piston rod, a typical diameter of which measures 10-18 mm.

The inner and outer tubes are thus essentially of equal length and the outer tube is fixed in its longitudinal direction by means of the unit A and the said forked element. Both the forked element and the unit A are fastened/screwed tightly onto the inner tube. The wall element is anchored internally in the unit A and the openings of the channel are disposed at the respective ends of the tubes 2 and 3. The element 14 is screwed tightly into the piston rod and is provided partly with securing mechanisms, partly with the flange 13.

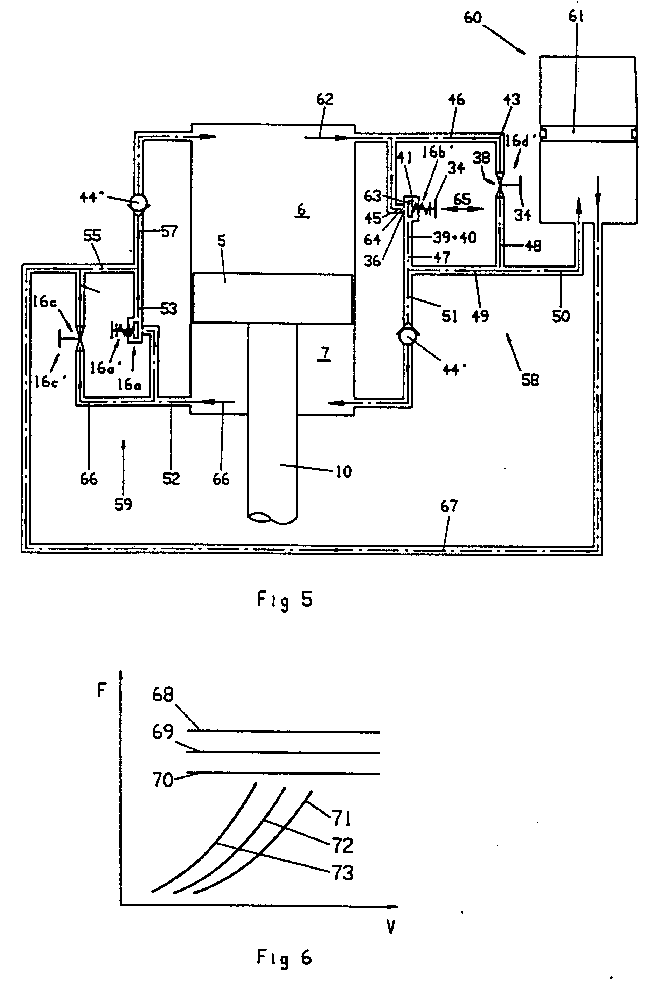

In Figure 5, the different elements which form part of the shock absorber have the same reference symbols as corresponding elements in Figures 1-4. Channels/channel elements disposed outside the cylinder are denoted by 46, 47, 48, 49, 50, 51 for the reciprocal compression motions of the piston and cylinder and 52, 53, 54, 55, 56, 57 for the expansion motions, which channels, taken together, are also indicated by 58 and 59 respectively. The latter units operate in an essentially corresponding manner from the functioning aspect. The valve functions are constructed in an essentially corresponding manner in the units 58, 59. An accumulator (function) (not indicated in Figures 1-4) is indicated by 60. The accumulator can be of the type which has a floating piston 61. During the compression motion of the piston rod 10, the accumulator receives displaced medium from and, during the expansion motion, conducts the said medium back to the chamber 6 above the piston, so that pressurisation is constantly being obtained in this chamber during the relative piston and cylinder motions. Other medium displaced by the piston is transferred between the top and bottom sides of the piston via the said channels/units 58, 59. When compression takes place, the medium flow is forced from the top side of the piston, via the channels 46-51, to the accumulator and to the bottom side of the piston. The control valve 16b grants passage for the medium flow, through its valve and seat elements 63 and 64, in a flow direction indicated by arrows 62. In the opposite direction, the valve 63 closes off the passage or the throttling 36 by virtue of the flow force being added, in this case, to the closing force (adjustable) of the valve, which force would therefore be bound to be surmounted by the flow force in the direction 62. The valve is adjustable according to the above, preferably manually, by means of the actuating mechanism 34. The direction of motion of the valve is shown by 65. By means of the actuating mechanism 34, that closing force which is in each case surmountable by the flow force in the direction 62 is adjusted higher or lower, the adjustment function being able to operate in a graduated or non-graduated manner. The leakage valve (bleeder) 16d' is also adjusted in order to grant a greater or lesser desired passage of medium in the direction 62. From the channels 47 and 48, the medium flow is divided towards the accumulator via the channel 50 and towards the bottom side of the piston via the channel 51. Incorporated in the latter are the one-way function or clack valve 44'. The unit 59 functions in a manner corresponding to the unit 58 for the expansion motion, where medium is transferred in a corresponding manner, in the direction of the arrows 66, via valve mechanisms 16a', 16c' or 44''. The difference is that medium displaced by the piston rod during compression is conducted back in the direction of the arrow 67, via the conduit 56, to the top side of the piston. The said valves can be constituted by known constructions and operate on known functions. The adjustment and control functions can also be realized in a known manner.

The preferably manually adjustable valves can be used to determine, for example, curves on the force/velocity graph according to Figure 6. Levels 68, 69, 70 are determined by adjustment or control of the valve 16b' (only the compression curve is shown in Figure 6) or 16a' (for the non-represented expansion curve). The leakage valve 16d' (compression) or 16c' (expansion) is used to determine slopes of the curve or lines of the curves 71, 72, 73. The respective curve can thus be composed by the said adjustment or controlling function and adjustments can thus, for example, be carried out in order to eliminate hysteresis effects, adapt the damping function to a certain track profile etc.

The invention is not limited to the embodiment shown by way of example above, but can be subject to modifications within the framework of the subsequent patent claims and inventive concept.

In Figure 5a a cylinder is designated 74, a piston 75 and a piston rod 76. The cylinder is connected to an arrangement including two adjustable and/or controllable valves 77 and 78. The arrangement includes also two one-way flow arrangement 79 and 80 and too adjustable bleed valve arrangement 81 and 82. The valves 77, 80, 81 are allocated to the compression movement and 78, 79 and 82 to the expansion movement. Valves 77 and 78 allow fluid flow in one respective direction only. The bleed valves 81 and 82 are adjustable in a known way. In this case the bleed flow is conducted only through the non-return valves 79 and 80, respectively. The pressure in the accumulator 83 is rather high, for example 30-40 bar.

## Claims

1. Device relating to a shock absorber (1), which comprises a cylinder (2) and a therein-operating piston (5) and at least one channel (4) which is disposed outside the cylinder and in which the working medium of the cylinder is displaceable, upon the motions (23) of the piston, for passage via one or more adjustment mechanisms (16b', 16d') which determine one or more shock absorber parameters and which are arranged to be accessible from the outside of the shock absorber, characterised of the following combination,
a) outside the cylinder are disposed two channel system (58, 59), the first system (58) of which is allotted to the compression motions and the second system (59) of which is allotted to the expansion motions of the shock absorber,
b) that said adjustment mechanism(-s) is/are adapted in said first and second channel systems,
c) the working medium via said channel systems is pressurised by means of an accumulator function (60) at said compression and expansion motions,
d) the accumulator function working with gas and oil media separated,
e) adjustments operations are available in the high and low speed ranges of the shock absorber, and
f) that the adjustment range having at least three levels.

2. Device according to claim 1, characterised in that the adjustment operation is combined with a low pressure operation of the shock absorber.

3. Device according to claim 1 or 2, characterised in that the shock absorber includes a twin tube arrangement.
